# EUROPEAN PATENT APPLICATION

(11) **EP 1 074 178 A1**
(43) Date of publication of application: **07.02.2001**
(21) Application number: 99830498.4
(22) Date of filing: 30.07.1999
(51) Int. Cl.: A01M 7/00, A01M 9/00

(54) **Multi purpose blowing apparatus**

(71) Applicant: Cifarelli S.p.A., 27058 Voghera (Pavia) (IT)
(72) Inventor: Cifarelli, Roberto, 27058 Voghera (Pavia) (IT)
(74) Representative: Sutto, Luca, Ing.

(57) **Abstract**

A multi-purpose blowing apparatus is provided, in particular for use in the agricultural field and the like, comprising an engine (2), a centrifugal fan wheel (3) adapted to generate a radial delivery air flow (4) and having first and second series of blades (8, 9) on opposite faces thereof, which are adapted to generate, during suction, respective axial air flows (10, 11) coming together from opposite parts, and a volute header (5) adapted to convey the radial air flow (4) towards the provided use means.

## Description

The present invention relates to a multi-purpose blowing apparatus, in particular for use in the agricultural field and the like, comprising an engine, a centrifugal fan wheel moved by the engine and adapted to generate a radial air flow, a volute header enclosing said fan wheel and adapted to convey said radial flow at least partly towards the intended use means.

It is known that in many applications, such as in the agricultural field, when cleaning of streets and pavements or grasslands is concerned, as well as for other similar application fields, portable blowing apparatus are used which are adapted to produce a strong air jet.

This air jet can be employed for spraying or atomizing anticryptogamic or manuring liquids held in small tanks associated with the blowing apparatus itself, or may constitute an air current of appropriate force for removal and displacement of leaves or other light material from road surfaces or grasslands.

The blowing apparatus generally comprises a two-stroke inner combustion engine moving a centrifugal fan wheel adapted to generate a substantially radial delivery air flow. The fan wheel is externally surrounded by a volute header adapted to convey the air flow at least partly towards the intended use means, which may consist for example of a flexible hose adapted to be gripped by an operator responsible for the apparatus.

In the known art, the centrifugal fan wheel is comprised of blades which during suction form a single substantially axial air flow converging towards the blades themselves, on the opposite side with respect to the engine.

Part of the delivery air flow is deviated from the provided main use and conveyed towards the engine sometimes contained at least partly in a casing, for cooling of the engine itself.

The known art briefly described above has some important drawbacks.

In fact, first of all, it is characterized by a non-optimal yield because the delivery air flow is not completely conveyed towards the use means provided for the blowing apparatus, but it is partly deviated for engine cooling. Part of the used energy is therefore employed for merely achieving a correct engine operation and the air flow really utilized has a smaller flow rate than that emitted from the wheel fan.

It should be also pointed out that engine cooling by means of an overpressure air flow is often of poor efficiency; in fact, due to flow resistance to which the air flow is submitted while passing through often tortuous passageways between the engine and casing, overpressure is reduced or eliminated, which will therefore stop or at all events decrease the air outflow.

It is to be added that if the engine is not provided with a casing for improving cooling thereof, it produces a strong noise often higher than the limits that in some countries are allowed by regulations against sound pollution.

At all events, the blowing apparatus in accordance with the known art, even if it is provided with an engine-holding casing, often does not succeed in maintaining the engine noise within limits of acceptability because the cooling air flow, after impinging on the engine, flows out of the casing together with sound waves.

It is also to be noted that the air flow dedicated to engine cooling, heated by heat exchange with said engine, forms a troublesome hot air mass often directed towards the operator or other people near him/her.

Finally, it should be recognized that the fan wheel used in the known art which has a single axial-suction flow is asymmetric from a mechanical and hydraulic point of view and therefore it can be easily submitted to vibrations giving rise to a further noise source.

Under this situation, the technical task underlying the present invention is to conceive a multi-purpose blowing apparatus capable of substantially obviating the mentioned drawbacks.

Within the scope of this technical task, it is an important object of the invention to devise a blowing apparatus having a high yield and operating efficiency.

Another important object of the invention is to devise a blowing apparatus capable of improving efficiency in cooling the engine provided therein.

A further object is to provide a blowing apparatus emitting a reduced level of noise to the surrounding atmosphere.

A still further object of the invention is to devise a blowing apparatus capable of exclusively producing an air current to the outside, the direction of which is directly controlled by the operator without generating any troublesome hot air current directed against the operator or other people.

The technical task mentioned and the objects specified are substantially achieved by a multi-purpose blowing apparatus which is characterized in that said centrifugal fan wheel has, on opposite faces, first and second blade series which, during suction, are adapted to generate respective air currents coming together from opposite directions.

Description of a preferred embodiment of a multi-purpose blowing apparatus in accordance with the invention is now given hereinafter, by way of non-limiting example, with reference to the accompanying drawings, in which:

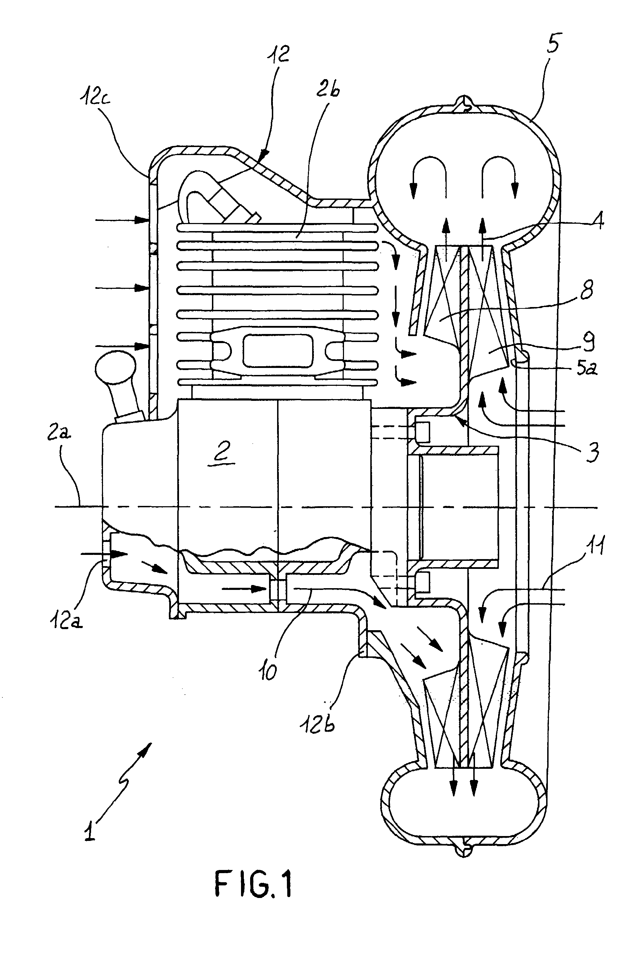

- Fig. 1 is a section taken along an axial plane of the apparatus in accordance with the invention; and

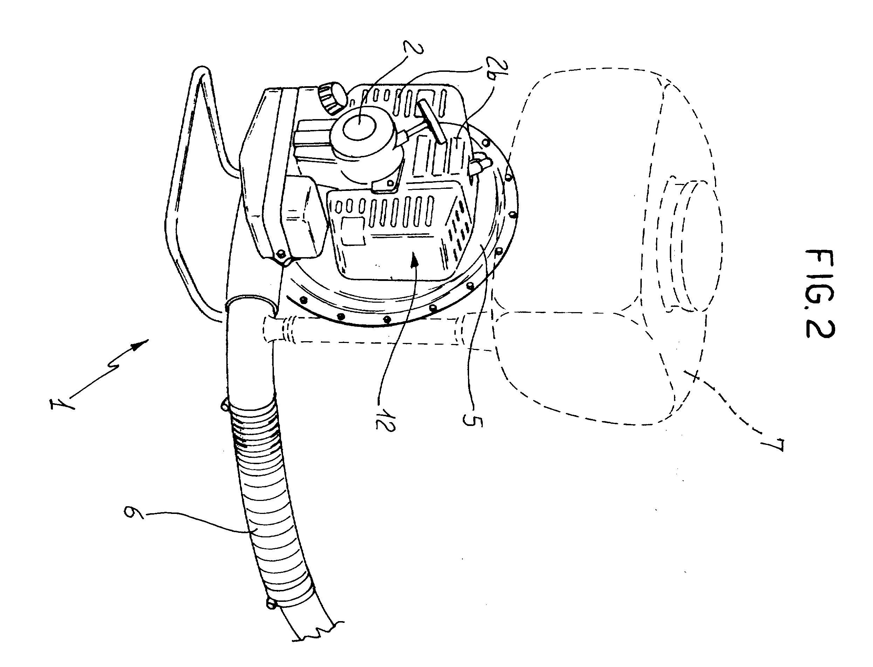

- Fig. 2 is a front view of the apparatus in Fig. 1.
with reference to the drawings, the multi-purpose blowing apparatus in accordance with the invention is generally identified by reference numeral 1.

It comprises an internal combustion engine 2, provided with at least one cylinder, having cooling blades 3. The driving shaft 2 moves a centrifugal fan wheel 3 coupled therewith and capable of generating a radial delivery air flow identified by arrows 4. The air flow is conveyed towards the provided use means by a volute header 5 externally surrounding the fan wheel 3. Said use means generally comprises a flexible hose 6, direction of which can be controlled by the operator, and optionally a liquid to be atomized housed in a tank 7 disposed thereabove is admitted to said hose.

In an original manner, the centrifugal fan wheel 3 has first blades 8 and second blades 9 on opposite faces thereof, said blades being respectively adapted, during suction, to generate substantially axial air flows i.e. flows directed parallelly of the engine axis 2a and coming together from opposite directions, that is a first axial flow identified by arrows 10 and a second axial flow represented by arrows 11.

Engine 2 is disposed along the path of said substantially axial first flow 10 so that the latter, by externally grazing said engine, practically defines a sucking flow for engine cooling, generated by the corresponding first blades 8 facing the engine.

Advantageously, from a hydraulic point of view, the first blades 8 are such designed that during suction they generate the axial flow 10 with a flow rate adapted to completely cool the engine. In this way, the radial delivery air flow 4 can be completely conveyed by the volute header 5 towards the use hose 6. Practically, due to the described solution, it is therefore not necessary to draw part of this radial flow produced by the fan wheel in order to direct it towards the engine for cooling purposes.

The second blades 9, in turn, during suction generate a second flow returned towards the fan wheel from a feeding opening 5a defined by the volute header 5. The feeding opening 5a is placed opposite to the first blades 8 and extends coaxially with the engine axis at a region radially internal to the second blades 9.

It is further to be pointed out that engine 2 is completely enclosed in a casing 12 provided with ventilation openings 12a to be passed through by the first suction flow 10.

Casing 12 has a shell-like conformation and is connected at an attachment edge 12b thereof with the volute header 5. The ventilation openings 12a are all disposed in a bottom wall 12c of the casing substantially transversal to the engine axis 2a and they are positioned on the opposite side with respect to the attachment edge 12b. In particular, part of the ventilation openings 12a are disposed in a region of the bottom wall 12c substantially close to the cooling blades 2b of engine 2 so that the first air flow during suction 10 impinges on the engine surface above all where a greater heat removal is required.

Finally, all the casing walls are particularly arranged for sound insulation to reduce spreading of noise to the surrounding atmosphere to the highest degree.

The invention achieves important advantages.

In fact, first of all, it should be pointed out that utilization of one of the sucking air flows for cooling the engine increases the apparatus yield to an important degree as compared with apparatuses of the known art because all the air coming out of the fan wheel is conveyed towards the intended use means.

It will be further recognized that also efficiency of the engine cooling is improved, since the centrifugal fan wheel creates a vacuum within the wheel casing, which vacuum is adapted to ensure circulation of the air entering from the outside and reaching each region around the engine without stagnation regions being formed.

It should be noted that vacuum within the casing is not adversely affected by a possible reduction in the opening ports required for suction: because of this fact, noise from the apparatus is further limited, said noise being made already less strong due to air suction in the engine region and therefore to tendency of the sound waves to remain confined within the engine casing.

Due to the presence of cooling openings exclusively at the bottom region of the casing, the residual outgoing sound waves are oriented towards the side opposite to the operator's closest side.

Moreover, the operator is not impinged on by any hot air mass, because the sucking air flow heated by the engine, in addition to being mixed with the cold air of the second sucking flow, is at all events conveyed far away, through the flexible hose into which it flows.

Finally, it will be recognized that the centrifugal fan wheel with two opposite blade series is dynamically more balanced and therefore gives rise to less vibration and a more reduced noise, offering greater reliability, without on the other hand requiring heavy axial-stop systems.

## Claims

1. A multi-purpose blowing apparatus, in particular for use in the agricultural field and the like, comprising:
- an engine (2),
- a centrifugal fan wheel (3) moved by the engine and adapted to generate a radial delivery air flow (4), and a volute header (5) surrounding said fan wheel (3) and adapted to convey said radial flow (4) at least partly towards the provided use means,
characterized in that said centrifugal fan wheel has first blades (8) and second blades (9) on axially opposite faces, which blades during suction are adapted to generate respective air flows (10, 11) coming together from opposite directions.

2. An apparatus as claimed in claim 1, characterized in that said air flows are substantially axial and opposite to each other at least at the fan wheel (3) entry.

3. An apparatus as claimed in claim 1 or 2, characterized in that said engine (2) is disposed along the path of a first one of said two flows (10, 11), so that said first flow (10) defines a sucking flow for engine cooling, generated by the corresponding first blades (8) of said centrifugal fan wheel (3).

4. An apparatus as claimed in claim 3, characterized in that said first blades (8) generate said first sucking flow (10) for enginge cooling having a flow rate adapted to complete cooling of the engine (2), so that said radial delivery air flow (4) can be completely conveyed from said volute header (5) to the provided use means.

5. An apparatus as claimed in claim 3, characterized in that it comprises an engine-holding casing (12) having ventilation openings (12a) to be passed through by said first sucking flow (10) for engine cooling.

6. An apparatus as claimed in claim 5, characterized in that said engine-holding casing (12) has a shell-like conformation and is connected at an attachment edge (12b) thereof with said volute header (5).

7. An apparatus as claimed in claim 6, characterized in that said ventilation openings (12a) are disposed in a bottom wall (12c) of said casing (12) substantially transverse to the axis (2a) of the engine (2) and positioned on the opposite side from said attachment edge (12b).

8. An apparatus as claimed in claim 7, characterized in that said ventilation openings (12a) are placed at least partly in a region of said bottom wall (12c) of the casing (12) substantially disposed close to one series of engine-cooling blades (3).

9. An apparatus as anyone of the preceding claims, characterized in that the second blades (8) during suction generate a second air flow returned through at least one feeding opening (5a) defined by said volute (5) and opposite to the first blades (8).

10. An apparatus as claimed in claim 9, characterized in that said feeding opening extends coaxially with the axis of said engine, at a region radially internal to said second blades (9).

11. An apparatus as claimed in claim 5, characterized in that said engine-holding casing (12) comprises walls adapted to sound insulation.
